(19) Europäisches Patentamt

European Patent Office

Office européen des brevets

(11) **EP 0 969 360 A1**

(12) **DEMANDE DE BREVET EUROPEEN**

(43) Date de publication:
**05.01.2000 Bulletin 2000/01**

(51) Int Cl.⁷: **G06F 9/44**

(21) Numéro de dépôt: **99401592.3**

(22) Date de dépôt: **25.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.06.1998 FR 9808298**

(71) Demandeur: **BULL S.A.**
**78434 Louveciennes Cedex (FR)**

(72) Inventeurs:
• **Baille-Pierre, Cécile**
**92290 Chatenay Malabry (FR)**
• **Parigot, Marc**
**92420 Vaucresson (FR)**

(74) Mandataire: **Denis, Hervé et al**
**Direction de la**
**Propriété Industrielle Bull S.A.**
**Poste courrier: LV-58F35**
**68, route de Versailles**
**78434 Louveciennes Cedex (FR)**

(54) **Procédé d'administration d'un système de traitement de l'information**

(57)     L'invention concerne un procédé d'administration d'applications ($Appli_1$-$Appli_n$) exécutées sur un système de traitement de l'information (6) comprenant une plate-forme d'administration (7) dont les composants sont modélisés sous forme d'objets $(Obj_i)$. Lors d'une phase préliminaire, un dispositif spécifique (70) analyse les objets $(Obj_i)$ et recherche leurs caractéristiques. En les associant aux règles d'administration des applications ($Appli_1$-$Appli_n$), le dispositif construit un jeu de processus spécifiques (50). Lors de phases ultérieures, l'administrateur ($Ad$) saisit des règles d'administration des applications ($Appli_1$-$Appli_n$) et un second dispositif spécifique (51) associe les processus spécifiques (50) aux règles saisies, de manière à déterminer le comportement de plate-forme d'administration (7) lors de l'exécution des applications ($Appli_1$-$Appli_n$).

FIG_2

**Description**

La présente invention concerne un procédé d'administration d'un système de traitement de l'information.

L'invention s'applique plus particulièrement, bien que non exclusivement, à des systèmes de grande puissance, appelés couramment "mainframes". Dans de tels systèmes s'exécutent de très nombreuses applications. Ils est donc nécessaire de configurer de façon optimale ces applications, ce en fonction des autres composants du système, ressources matérielles et logicielles, notamment du système d'exploitation.

Pour ce faire, le système de traitement de l'information dispose, notamment, d'une plate-forme dite d'administration comportant des outils spécifiques.

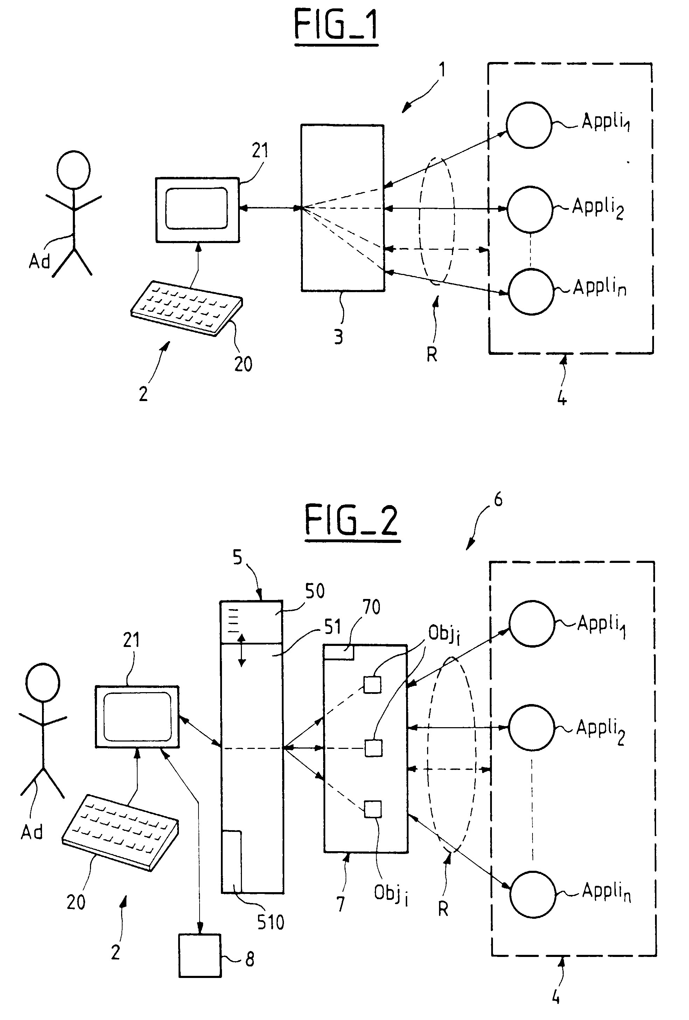

La figure 1, placée en annexe de la présente description, illustre schématiquement l'architecture d'un système de traitement de l'information 1 selon l'art connu. On n'a représenté sur cette figure que les éléments essentiels nécessaires à la bonne compréhension de l'invention : un ensemble 4 d'applications $Appli_1$ à $Appli_n$, $n$ étant un nombre arbitraire, une plate-forme d'administration 3, et une console 2 incluant au moins un clavier d'entrée de données 20 et un écran de visualisation 21.

La console 2 est mise à la disposition d'un administrateur $Ad,$ personne physique, ou de tout autre expert. Les applications $Appli_1$ à $Appli_n$ constituent ce que l'on peut appeler le "monde réel". Pour fixer les idées, et à titre d'exemple, il peut s'agir de bases de données relationnelles, telle "ORACLE" (marque déposée), etc. Comme il est bien connu, un certain nombre de liens, sous la référence unique R, relient la plate-forme d'administration 3 aux applications $Appli_1$ à $Appli_n.$ Celle-ci présente à l'administrateur $Ad$ une réalité virtuelle du "monde réel", via la console de visualisation 2, et plus particulièrement par affichage sur l'écran 21.

Le rôle habituel d'un administrateur $Ad$ est multiple : il surveille la machine, la configure, déclenche des logiciels, surveille des indicateurs qui peuvent déclencher des alarmes automatiquement, ou manuellement sous la commande de l'administrateur, etc. De façon générale, la connaissance d'un expert, pour un domaine donné, est constituée par un ensemble de processus spécifiques d'administration. Ces processus décrivent le comportement que doit avoir la plate-forme d'administration face à divers états et situations rencontrés lors de l'exécution d'une application donnée.

On conçoit aisément que, notamment pour les systèmes de grande puissance précités, incluant éventuellement des multiprocesseurs ou des machines en réseau, la tâche de l'administrateur est généralement très complexe. En outre, il est courant que la plate-forme d'administration soit modélisée à l'aide d'un langage de modélisation, tel le langage formel de modélisation normalisée d'objets "GDMO" (Guidelines for the Definition of Managed Objects), très utile pour la modélisation précitée, mais qui se révèle complexe et, vu de la console 2, peu ergonomique.

Chaque application $Appli_1$ à $Appli_n$ doit être configurée individuellement, et il existe des possibilités d'interactions entre applications distinctes.

Enfin, dans le type de système précité, certains composants logiciels, notamment la partie logicielle de la plate-forme d'administration, sont d'un type dit "propriétaire", voire propre à un type de machine. Des processus d'administration connus pour une machine ou un système ne sont donc pas portables tels quels, d'une plate-forme d'administration à l'autre, voire d'un site à l'autre.

Pour toutes ces raisons, il existe en réalité deux type d'experts, ou plus précisément deux types d'expertises difficilement cumulables. D'une part, il existe des experts connaissant très bien les applications, $Appli_1$ à $Appli_n,$ par exemple un expert des bases de données "ORACLE" précitées. D'autre part, il existe des experts, ou administrateurs proprement dits, connaissant bien les particularités d'une plate-forme d'administration donnée 3.

Il s'ensuit que si un expert ou administrateur au niveau application, $Appli_1$ à $Appli_n,$ désire configurer une ou plusieurs applications chargées dans le système de traitement de l'information 1 et devant s'exécuter dans celui-ci, il doit s'investir dans la connaissance des particularités et caractéristiques de sa plate-forme d'administration 3. En effet, comme il a été rappelé, cette plate-forme d'administration 3 va lui présenter une réalité virtuelle du "monde réel" constitué par les applications $Appli_1$ à $Appli_n.$ Cette réalité virtuelle utilise une présentation des données ou des objets, propre au modèle utilisé.

Il existe donc un certain nombre de besoins qui se font sentir, besoins qui ne sont pas remplis par les procédés d'administration des systèmes de traitement de l'information selon l'art connu, ou pour le moins imparfaitement.

Il est notamment utile, voire nécessaire:

- que l'on puisse dé-corréler les processus d'administration du modèle de représentation d'objets ;

- que l'on puisse dé-corréler les processus d'administration de la technologie sous-jacente utilisée ;

- que les processus d'administration soient portables d'un type de plate-forme à l'autre ;

- qu'il ne soit pas nécessaire à un expert d'un domaine ou d'une application de s'investir dans la connaissance des caractéristiques de la plate-forme d'administration ;

- et que la configuration d'une ou plusieurs applications puisse s'effectuer, à partir d'une console système, de façon simple selon une représentation usuelle, par exemple par l'écriture d'un script en langage directement compréhensible par un opérateur ayant l'expertise des applications à administrer.

En d'autres termes, les spécificités de la plate-forme d'administration doivent rester transparentes "vues" de la console utilisée par un administrateur ou un expert des applications pour saisir des règles d'administration des applications.

Pour ce faire, selon une des caractéristiques principales de l'invention, on prévoit un dispositif spécifique, par exemple implanté dans la plate-forme d'administration. Dans une phase préliminaire, ce dispositif scrute les différents objets de la plate-forme d'administration et les analyse pour rechercher leurs caractéristiques, telles qu'elles sont décrites par le langage de modélisation précité. D'autre part, ce dispositif analyse les règles d'administration standards des applications. A partir de ces deux séries d'entités, le dispositif construit un jeu de processus spécifiques qui est stocké dans le système de traitement de l'information. Ce jeu de processus spécifiques adapte le comportement de la plate-forme d'administration à la gestion des applications précitées.

Dans une phase ultérieure, lorsqu'un expert veut configurer une ou plusieurs applications données, un deuxième dispositif spécifique est prévu pour s'interposer entre la plate-forme d'administration et la console système. Ce dispositif, formant filtre, utilise les processus spécifiques stockés dans la phase préliminaire. De ce fait, l'expert peut administrer les applications en utilisant des procédés usuels en la matière et s'affranchir des caractéristiques de la plate-forme d'administration, de la technologie qui lui est sous-jacente et de la manière dont elle a été modélisée.

L'invention a donc pour objet un procédé d'administration d'un système de traitement de l'information, ledit système incluant au moins une application à administrer et une plate-forme d'administration comprenant une pluralité de composants à caractéristiques déterminées, caractérisé en ce qu'il comprend :

- une phase préliminaire comprenant les étapes suivantes :

    a/ analyse desdits composants de la plate-forme et recherche desdites caractéristiques déterminées de ces composants ;

    b/ recherche des règles d'administration de chacune desdites applications ;

    c/ mise en correspondance desdites caractéristiques et règles, de manière à créer un jeu de processus spécifiques destinés à fournir des mécanismes permettant d'adapter le comportement desdits composants de la plate-forme à l'administration de chacune desdites applications ;

    d/ et mémorisation desdits processus spécifiques ;

- et une phase d'administration d'au moins une desdites applications comprenant au moins les étapes suivantes :

    a/ saisie par un opérateur d'au moins une règle d'administration desdites applications, ladite règle saisie comprenant au moins une entité spécifique dite symbole ;

    b/ et détection de chacun desdits symboles et son association avec l'un desdits processus spécifiques mémorisés, de manière à déterminer le comportement des ladite plate-forme d'administration lors de l'exécution desdites applications administrées, pour réaliser ladite règle d'administration saisie.

L'invention a pour objet corollaire un outil d'administration incorporant un programme pour la mise en oeuvre du procédé de l'invention, le support d'enregistrement de l'outil et le système informatique géré conformément au procédé de l'invention ou incorporant l'outil ou le support conforme à l'invention.

L'invention sera mieux comprise et d'autres caractéristiques et avantages apparaîtront à la lecture de la description qui suit en référence aux figures annexées, parmi lesquelles :

- la figure 1 illustre schématiquement un procédé d'administration d'un système de traitement de l'information selon l'art connu ;

- et la figure 2 illustre schématiquement un procédé d'administration d'un système de traitement de l'information selon l'invention ;

Avant de décrire le procédé d'administration d'un système de traitement de l'information selon l'invention, on va tout d'abord décrire, en partant d'un exemple particulier, les étapes d'un procédé représentatif de l'art connu, et les difficultés et inconvénients qu'il présente.

On suppose qu'un administrateur d'une base de données "ORACLE", qui représente une des applications précitées, par exemple l'application $Appli_2$, désire exprimer la règle d'administration de cette base de données suivante :

"*Si le taux d'occupation du TableSpace DBA_EXPERT de la base ORAxxx est supérieur à 80 %*, *alors déclencher l'émission d'une alarme*" (1),

ce qui semble a priori une règle simple. Dans la règle (1) ci-dessus, les expressions *"TableSpace"* (espace de table) et *"DBA_EXPERT"* sont des instructions ou paramètres propres à cette application et bien connus d'un expert de celle-ci. *"ORAxxx"* est le nom d'une base de données particulière, *"xxx"* représentant, dans l'exemple, un numéro quelconque associé à la base de données.

Selon l'art connu, et dans une plate-forme d'administration de caractéristiques particulières, pour implémenter la règle (1), c'est-à-dire configurer cette plate-forme de telle façon que l'administration des bases de données soit régie par cette règle, l'administrateur ou l'expert devait agir manuellement et contrôler le séquencement d'étapes suivant :

1/ installer sur le système de traitement de l'information une pièce de logiciel spécialisé, couramment appelé "agent intelligent", capable d'interroger les interfaces d'administration de la base de données "ORACLE", c'est-à-dire l'application $Appli_2$ ;

2/ configurer le système de traitement de l'information pour lui préciser son ou sa console de gestion ;

3/ configurer l'agent intelligent pour qu'il interroge effectivement les interfaces d'administrations de la base "ORACLE" et récupère les attributs classiques suivants :

- *"OraDbTableSpaceSizedUsed"* (2) (taille de table utilisée)

- *"OraDbTableSpaceSizedAllocated"* (3) (taille de table allouée)

4/ configurer l'agent intelligent pour qu'il calcule, à partir des deux attributs récupérés à l'étape précédente, l'indicateur suivant :

*"TableSpaceUsedPercent = (OraDbTableSpaceSizedUsed/OraDbTableSpaceSizedAllocated)"*

5/ configurer l'agent intelligent pour créer une action d'émission d'une alarme ;

6/ positionner le seuil pour l'émission effective de l'alarme à 80% sur l'indicateur calculé, en précisant que l'action à exécuter quand ce seuil est atteint est l'émission d'une alarme (action précédemment créée) ;

7/ sur la console de gestion, prévoir un élément distinctif associé à cette alarme, par exemple en dessinant une icône à l'aide de circuits de gestion d'affichage appropriés, et configurer cette icône de telle manière que la réception de l'alarme puisse provoquer l'animation de l'icône ou son changement de couleur (par exemple passer d'une couleur verte à une couleur rouge).

On constate aisément que, même s'il s'agit de la formulation de règles d'administration très simples, et qui s'expriment sous une forme compréhensible par un expert du domaine, ici un administrateur de bases de données, ces règles se traduisent par la configuration d'un nombre élevé d'éléments d'une chaîne d'administration. Ces configurations sont très éloignées du formalisme initial auquel est habitué l'administrateur de base de données précité. Si celui-ci désire examiner l'ensemble des configurations nécessaires à application $Appli_2$, et *a fortiori* à toutes les applications $Appli_1$ à $Appli_n$, cette opération atteindra un tel degré de complexité que le processus ne sera pas réalisable en pratique.

En outre, comme il a été indiqué, il est d'usage de modéliser les composants de la plate-forme d'administration 3 (figure 1), en ayant recours à un langage de modélisation, par exemple le langage de modélisation formel par objets "GDMO". La difficulté qui vient d'être montrée est renforcée par le fait que les objets manipulés le sont au travers de références par des nommages qui sont propres au modèle de représentation retenu, par exemple "GDMO" précité.

Pour fixer les idées, l'objet de la base "ORACLE" qui répond à l'appellation bien connue *"Table Space DBA_EXPERT"* de la base *"ORAxxx"*, appellation commune à tout administrateur d'une telle base, quel que soit le système de traitement de l'information sur lequel elle est implantée, est référencé selon "GDMO" comme il va être indiqué par l'exemple ci-après.

Les bases de données sont référencées par exemple par l'indicateur suivant 1.3.6.1.2.1.27.1.1, qui a pour nom symbolique *"appl".*

Comme il peut exister plusieurs bases de données sur une même machine, cet indicateur pointe en réalité sur une table. Il existe dans cette table autant de lignes que de bases de données sur la machine. Chaque ligne comprend l'ensemble des attributs de l'objet décrivant pleinement les caractéristiques de la base de données correspondante. Pour pouvoir désigner dans cette table la base de données recherchée, on prévoit un attribut jouant un rôle particulier, appelé *"index".*

Il s'ensuit que chaque ligne de la table comprend au moins les deux attributs suivants :

- *"index",* qui sert d'index et dont l'identifiant est 1.3.6.1.2.1.27.1.1.1 (soit *"appli.1"*);

- *"name",* c'est-à-dire le nom de la base de données, dont l'identifiant est 1.3.6.1.2.1.27.1.1.2 (soit *"appli.2").*

Pour des raisons pratiques, il est d'usage de considérer que *"index"* est du type entier. Il est donc impossible de désigner une table directement par son nom.

En supposant, par exemple, que la base de données *"ORAxxx"* a pour index 4, cette base de données a donc pour identificateur 1.3.6.1.2.1.27.1.1.4 (soit *"appli.4")* .

L'identification du paramètre *"TableSpace"* est encore plus complexe, car il peut exister plusieurs *"TableSpace"* dans une même base de données. On recourt donc à une double indexation. La première indexation désigne la base de données et la seconde le paramètre *"TableSpace"* de cette base de données.

La table des "TableSpace" est référencée par l'identifiant : 1.3.6.1.4.1.111.4.2.1 (soit le nom symbolique *"oraDbTablespace").* Il s'ensuit que la table des *"TableSpace"* contient au moins les quatre attributs suivants :

- "index", qui sert d'index et dont l'identifiant est 1.3.6.1.4.1.111.4.2.1.1 (soit *"oraDbTablespace.1"*) ;

- *"name",* c'est-à-dire le nom, dont l'identifiant est 1.3.6.1.4.1.111.4.2.1.2 (soit *"oraDbTablespace.2"*) ;

- *"SizeAllocation",* c'est-à-dire la taille allouée, dont l'identifiant est 1.3.6.1.4.1.111.4.2.1.3 (soit *"oraDbTablespace. 3"*) ;

- *"SizeUsed",* c'est-à-dire la taille utilisée, dont l'identifiant est 1.3.6.1.4.1.111.4.2.1.4 (soit *"oraDbTablespace.4"*).

Puisque les paramètres *"TableSpace"* de la base de données *"ORAxxx"* ont comme premier index 4, pour effectuer un choix, il est nécessaire de préciser un second index, celui qui pointe sur "TableSpace DBA_EXPERT", soit 1. Les identifiants des attributs de ce paramètre *"TableSpace"* sont donc les suivants :

- "index" dont l'identifiant est 1.3.6.1.4.1.111.4.2.1.4.1 (soit *"oraDbTablespace.4.1"*) ;
- *"name",* dont l'identifiant est 1.3.6.1.4.1.111.4.2.1.4.2 (soit *"oraDbTablespace.4.2"*) ;
- *"SizeAllocation",* dont l'identifiant est 1.3.6.1.4.1.111.4.2.1.4.3 (soit *"oraDbTablespace.4.3"*) ;
- *"SizeUsed",* dont l'identifiant est 1.3.6.1.4.1.111.4.2.1.4.4 (soit *"oraDbTablespace.4.4"*).

Du fait de la modélisation de la plate-forme d'administration 3 (figure 1), la phrase : *"L'espace utilisé du TableSpace DBA_EXPERT de la base ORAxxx"* (4) se traduit donc par l'identifiant suivant :

　　1.3.6.1.4.1.111.4.2.1.4.4 (soit *"oraDbTablespace.4.4"*).

Il est aisé de constater que ce formalisme est très éloigné de ce que connaît l'administrateur de la base de données en question, qui s'exprime simplement par la phrase (4) précitée. Cette phrase, exprimée en langage "clair", est directement compréhensible par un utilisateur, qui est naturellement supposé connaître la structure et les règles d'administration de l'application.

On va maintenant décrire le procédé de l'invention par référence à la figure 2.

Le système de traitement de l'information, ici référencé 6, comprend, comme précédemment, une plate-forme d'administration 7 commandée par un administrateur *Ad,* ou un expert, par l'intermédiaire d'une console 2. Cette console 2 comprend notamment, comme précédemment, un clavier d'entrée de données 20 et un écran de visualisation 21. La plate-forme 7 administre également comme précédemment les applications $Appli_1$ à $Appli_n$. On a représenté une série de liens R entre ces applications $Appli_1$-$Appli_n$ et la plate-forme d'administration 7. On a enfin supposé que l'on a utilisé un langage de modélisation par objets des composants, matériels ou logiciels, de la plate-forme d'administration 7. Les composants modélisés, par exemple par utilisation du langage "GDMO" précité, ont été repérés par la référence unique $Obj_i$.

Selon l'invention, on prévoit un dispositif spécifique 70, comprenant avantageusement un premier outil logiciel, que l'on suppose implémenté dans la plate-forme d'administration 7, bien que sa localisation ne soit pas critique. Dans une phase préliminaire, ce dispositif 70 scrute les différents objets $Obj_i$ de la plate-forme 7 et les analyse pour rechercher leurs caractéristiques, telles qu'elles sont décrites par le langage de modélisation précité. D'autre part, le dispositif analyse les règles d'administration standards des applications $Appli_1$ à $Appli_n$. A cet effet, on peut prévoir des pièces de logiciel, dites agents intelligents (non représentés), formant interface avec la plate-forme d'administration 7 et permettant de lui présenter les règles de gestion et de configuration propres à chaque application $Appli_1$ à $Appli_n$. A partir de ces deux séries d'actions, et en associant les deux séries d'entités : règles ou variables d'administration des applications $Appli_1$ à $Appli_n$, et caractéristiques et propriétés des objets $Obj_i$ de la plate-forme d'administration 7, le dispositif spécifique 70 construit un jeu de processus spécifiques. Ce jeu de processus est stocké dans le système de traitement de l'information 6. Les processus spécifiques peuvent être constitués de tables physiquement stockées dans des mémoires 50 du système 6, que l'on suppose faisant partie d'une unité autonome 5, dont on va préciser l'utilité.

Les processus spécifiques, ainsi construits et stockés, vont permettre d'adapter le comportement d'une plate-forme d'administration particulière 7, modélisée par un langage de modélisation d'objets donné, à la gestion du système de traitement de l'information 6, et plus particulièrement à la gestion et à l'administration des applications $Appli_1$ à $Appli_n$. De ce fait, il est possible de dé-correler les règles d'administration de ces applications de la technologie sous-jacente de la plate-forme d'administration, qu'elle soit matérielle ou logicielle.

De façon classique en soi, on peut associer un éditeur graphique 8 à la console 2, qui va guider l'administrateur *Ad* dans sa saisie. L'administrateur *Ad,* ou l'expert, peut alors écrire les règles d'administration qu'il entend voir exécuter pour une application donnée, par exemple l'application $Appli_2$, que l'on a supposé être une base de données "ORACLE". Il saisit les règles en "clair", suivant une syntaxe contrôlée par l'éditeur 8, mais sans avoir à se préoccuper des règles de nommage spécifiques au langage de modélisation des composants de la plate-forme d'administration 7, et de leurs interrelations, ni même des caractéristiques spécifiques de celle-ci (technologie sous-jacente).

Pour fixer les idées, on va considérer de nouveau la règle d'administration (1) précitée. L'administrateur *Ad* va la saisir, avec l'aide de l'éditeur graphique 8 précité, sous une forme qui peut être légèrement modifiée, mais toujours en langage "clair". A titre d'exemple, la phrase (1) peut prendre la forme suivante :

"Si *TableSpaceUsedPercentDBA_EXPERT_ORAxxx supérieur à 80 %, alors déclencher l'émission d'une alarme"* (5).

La seule différence notoire est qu'il est ici utilisé une variable, à savoir :

*"TableSpaceUsedPercentDBA_EXPERT_ORAxxx*" (6),

à la place du membre de phrase *"le taux d'occupation du TableSpace DBA_EXPERT de la base ORAxxx".*

La variable (6) est une variable qui prend le résultat de l'évaluation exprimée par ailleurs par l'équation suivante :

$$\textit{"TableSpaceUsedPercentDBA\_EXPERT\_ORAxxx} =$$

$$(\textit{OraDbTableSpaceSizeUsed\_DBA\_EXPERT\_ORAxxx})*100/$$

$$(\textit{OraDbTableSpaceSizeAllocated\_DBA\_EXPERT\_ORAxxx})",$$

relation dans laquelle :
*"OraDbTableSpaceSizeUsed_DBA_EXPERT_ORAxxx"* (7) et
*"OraDbTableSpaceSizeAllocated_DBA_EXPERT_ORAxxx"* (8),
correspondent aux attributs (3) et (4) précités, appliqués à la base de données *"ORAxxx".* Ces attributs, ou symboles, apparaissent dans l'expression (6), mais probablement aussi dans d'autres expressions qui sont utilisées pour saisir des règles d'administration particulière de l'application $Appli_2$, c'est-à-dire la base de données "ORACLE".

Lors des phases ultérieures, ou phases opérationnelles, l'administrateur *Ad* saisit la ou les règles qu'il veut exécuter, avec l'aide de l'éditeur graphique 8. Une fois cette saisie effectuée, la requête qui correspond à la règle (6) n'est pas transmise directement à la plate-forme d'administration 7, mais passe par le "filtre" d'un dispositif spécifique référencé 51, disposé entre la console 2 et la plate-forme d'administration 7. Ce dispositif 51, partie de l'unité 5, peut être avantageusement constitué d'un second outil logiciel, comprenant un compilateur 510, ou similaire. Ce dispositif est en relation avec la mémoire 50 qui enregistre les processus spécifiques construits pendant la phase préliminaire.

De façon pratique, l'administrateur *Ad* saisit toutes les règles concernant l'application $Appli_2$ (base de données "ORACLE) à l'aide du clavier 20 de la console 2 et de l'éditeur graphique 8 qui lui est associé, sous forme d'un script provisoirement enregistré dans une mémoire locale (non représentée), par exemple partie intégrante de l'unité 5. Ce script est ensuite compilé par le compilateur 510 résident dans le dispositif 51. A chaque fois qu'un symbole du type (7) ou (8) est rencontré par le compilateur 510, celui-ci interroge la mémoire 50 stockant les processus spécifiques. Ceux-ci fournissent des mécanismes permettant d'effectuer une correspondance entre symboles et nommage propre à la plate-forme 7.

Dans l'exemple précisément décrit, ce mécanisme permet donc de manipuler l'expression (6) précitée, sans que l'administrateur ait à savoir comment sont représentées les entités *"TableSpaceDBA_EXPERT"* de la base de données *"ORAxxx"* dans la modélisation objet propre à la technologie de la plate-forme d'administration 7.

Bien que l'on ait indiqué jusqu'à présent que le jeu de processus spécifiques était construit et mémorisé lors d'une phase préliminaire, il doit être clair qu'il n'est pas figé une fois pour toutes. Cette phase peut être répétée à tout moment de la durée de vie d'un système de traitement de l'information, notamment pour tenir compte de l'évolution dans le temps des caractéristiques de la plate-forme d'administration, ou des ajouts, modifications et/ou suppressions d'applications. Il est clair que, dans ces différents cas, le jeu de processus spécifiques doit être, sinon entièrement renouvelé, mais pour le moins mis à jour.

Enfin, bien que l'unité 5 ait été supposée autonome, il est clair que ses composants, tant matériels (mémoire par exemple), que logiciels (compilateur ou autres pièces de logiciel), peuvent être distribués dans diverses unités du système de traitement de l'information 6.

A la lecture de ce qui précède, on constate aisément que l'invention atteint bien les buts qu'elle s'est fixés.

Le procédé objet de l'invention permet notamment de s'affranchir du modèle objet et de la technologie mise en oeuvre sur la plate-forme d'administration, lors de l'expression des règles d'administration.

Il doit être clair cependant que l'invention n'est pas limitée au seul exemple de réalisation explicitement décrit, notamment en relation avec la figure 2.

De même, les exemples précis de règles d'administration d'application, ainsi que les types d'applications énoncés, n'ont été donnés que pour mieux mettre en évidence les caractéristiques essentielles du procédé d'administration d'un système de traitement de l'information selon l'invention, et la manière dont il coopère avec les autres composants, matériels et logiciels du système pour obtenir les résultats rappelés.

**Revendications**

1. Procédé d'administration d'un système de traitement de l'information, ledit système incluant au moins une application à administrer *(Appli₁-Appliₙ)* et une plate-forme d'administration comprenant une pluralité de composants à caractéristiques déterminées, caractérisé en ce qu'il comprend :

    - une phase préliminaire comprenant les étapes suivantes :

        a/ analyse desdits composants ($Obj_i$) de la plate-forme (7) et recherche desdites caractéristiques déterminées de ces composants ($Obj_i$);

        b/ recherche des règles d'administration de chacune desdites applications ($Appli_1$-$Appli_n$);

        c/ mise en correspondance desdites caractéristiques et règles, de manière à créer un jeu de processus spécifiques (50) destinés à fournir des mécanismes permettant d'adapter le comportement desdits composants ($Obj_i$) de la plate-forme (7) à l'administration de chacune desdites applications ($Appli_1$-$Appli_n$);

        d/ et mémorisation desdits processus spécifiques (50) ;

    - et une phase d'administration d'au moins une desdites applications ($Appli_1$-$Appli_n$) comprenant au moins les étapes suivantes :

        a/ saisie par un opérateur ($Ad$) d'au moins une règle d'administration desdites applications ($Appli_1$-$Appli_n$), ladite règle saisie comprenant au moins une entité spécifique dite symbole ;
        b/ et détection de chacun desdits symboles et son association avec l'un desdits processus spécifiques mémorisés (50), de manière à déterminer le comportement des ladite plate-forme d'administration (7) lors de l'exécution desdites applications administrées ($Appli_1$-$Appli_n$), pour réaliser ladite règle d'administration saisie.

2. Procédé selon la revendication 1, caractérisé en ce que lesdits composants de la plate-forme d'administration sont constitués d'objets ($Obj_i$), matériels et logiciels, modélisés à l'aide d'un langage formel de modélisation d'objets, en ce que lesdits objets ($Obj_i$) sont liés auxdites applications ($Appli_1$-$Appli_n$) par un jeu de relations ($R$) , en ce que ladite modélisation présente à l'opérateur ($Ad$) lesdites applications à administrer ($Appli_1$-$Appli_n$) sous la forme d'une description virtuelle et en ce que ladite étape d'analyse desdits composants ($Obj_i$) de la plate-forme (7) et de recherche desdites caractéristiques déterminées de ces composants ($Obj_i$) consiste à rechercher des entités, dites de nommage, créées par ledit langage formel de modélisation d'objets et décrivant lesdites applications ($Appli_1$-$Appli_n$).

3. Procédé selon l'une des revendications 1 ou 2, caractérisé en ce que ladite phase préliminaire s'effectue sous la commande d'un premier outil logiciel spécifique (70), implanté dans ladite plate-forme d'administration (7).

4. Procédé selon l'une quelconque des revendications 1 à 3, caractérisé en ce que lors de ladite phase d'administration, ladite étape de saisie desdites règles d'administration desdites applications ($Appli_1$-$Appli_n$) par l'opérateur ($Ad$) s'effectue par utilisation d'une console (2) comprenant au moins un clavier d'entrée de données (20) et un écran de visualisation (21).

5. Procédé selon la revendication 4, caractérisé en ce que ladite console (2) est associée à un éditeur graphique (8), coopérant avec l'opérateur ($Ad$) de manière à ce que celui-ci puisse saisir lesdites règles d'administration desdites applications ($Appli_1$-$Appli_n$) sous la forme d'un script obéissant à des règles de syntaxe prédéterminées, sous la commande dudit éditeur graphique (8).

6. Procédé selon l'une des revendications 4 ou 5, caractérisé en ce que lors de ladite phase d'administration, ladite étape de détection desdits symboles et de leur association avec lesdits processus spécifiques mémorisés (50) s'effectue sous la commande d'un second outil logiciel spécifique (51), et en ce que ce second outil logiciel spécifique (51) est implanté dans un dispositif (5) formant interface entre ladite console (2) et ladite plate-forme d'administration (7).

7. Procédé selon la revendication 6, caractérisé en ce que ledit second outil logiciel spécifique (51) comprend un compilateur (510) et ladite étape de saisie desdites règles d'administration desdites applications par l'opérateur ($Ad$) sous la forme d'un script comprend la mémorisation temporaire dudit script et sa compilation par ledit compilateur (510).

8. Procédé selon l'une quelconque des revendications précédentes, caractérisé en ce ladite phase préliminaire est répétée lorsque l'un au moins des composants ($Obj_i$) de ladite plate-forme d'administration (7) est modifié.

9. Procédé selon l'une quelconque des revendications précédentes, caractérisé en ce ladite phase préliminaire est répétée lorsque au moins l'une desdites applications ($Appli_1$-$Appli_n$) est modifiée ou supprimée, ou lors de l'ajout d'une nouvelle application dans ledit système de traitement de l'information (6), de manière à mettre à jour ledit jeu de processus spécifiques (50) et à le mémoriser.

# FIG_1

# FIG_2

**Office européen
des brevets**

**RAPPORT DE RECHERCHE EUROPEENNE**

Numéro de la demande

EP 99 40 1592

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| X | US 4 692 858 A (REDFORD PETER M ET AL) 8 septembre 1987 (1987-09-08) * abrégé; revendications 1-12 * * colonne 1, ligne 62 - colonne 2, ligne 42 * * colonne 4, ligne 58 - colonne 5, ligne 22 * * colonne 20, ligne 51 - colonne 21, ligne 3 * --- | 1-9 | G06F9/44 |
| A | US 5 566 295 A (CYPHER ALLEN ET AL) 15 octobre 1996 (1996-10-15) * abrégé; revendications 1-15 * --- | 1,5 | |
| A | US 5 019 961 A (ADDESSO MARK ET AL) 28 mai 1991 (1991-05-28) * abrégé; revendications 1-15 * ----- | 1,5 | |

**DOMAINES TECHNIQUES RECHERCHES**

G06F

Le présent rapport a été établi pour toutes les revendications

| Lieu de la recherche | Date d'achèvement de la recherche | Examinateur |
|---|---|---|
| LA HAYE | 23 juillet 1999 | Suendermann, R |

**ANNEXE AU RAPPORT DE RECHERCHE EUROPEENNE
RELATIF A LA DEMANDE DE BREVET EUROPEEN NO.**

EP 99 40 1592

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-07-1999

| Document brevet cité au rapport de recherche | Date de publication | Membre(s) de la famille de brevet(s) | Date de publication |
|---|---|---|---|
| US 4692858 A | 08-09-1987 | AUCUN | |
| US 5566295 A | 15-10-1996 | AU 1728595 A<br>WO 9520188 A | 08-08-1995<br>27-07-1995 |
| US 5019961 A | 28-05-1991 | AUCUN | |

EPO FORM P0460

Pour tout renseignement concernant cette annexe : voir Journal Officiel de l'Office européen des brevets, No.12/82